(19) Europäisches Patentamt
European Patent Office
Office européen des brevets

(11) **EP 3 661 127 B1**

(12) **EUROPEAN PATENT SPECIFICATION**

(45) Date of publication and mention
of the grant of the patent:
**28.08.2024 Bulletin 2024/35**

(21) Application number: **19195768.7**

(22) Date of filing: **12.05.2015**

(51) International Patent Classification (IPC):
**H04L 41/0659** (2022.01)   **H04L 41/0895** (2022.01)
**H04L 41/0894** (2022.01)   **H04L 12/64** (2006.01)
**H04L 41/0893** (2022.01)   **H04L 41/0896** (2022.01)
**H04L 41/40** (2022.01)   **H04L 41/50** (2022.01)

(52) Cooperative Patent Classification (CPC):
**H04L 12/6418; H04L 41/0659; H04L 41/40;**
H04L 41/0893; H04L 41/0894; H04L 41/0895;
H04L 41/0896; H04L 41/5096

(54) **PARTIAL SOFTWARE DEFINED NETWORK SWITCH REPLACEMENT IN IP NETWORKS**

PARTIELLER SOFTWAREDEFINIERTER NETZWERKSCHALTERERSATZ IN IP-NETZWERKEN

REMPLACEMENT DE COMMUTATEUR DE RÉSEAU PARTIEL DÉFINI PAR LOGICIEL DANS DES
RÉSEAUX IP

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.05.2014 US 201461992063 P**

(43) Date of publication of application:
**03.06.2020 Bulletin 2020/23**

(62) Document number(s) of the earlier application(s) in
accordance with Art. 76 EPC:
**15792259.2 / 3 097 668**

(73) Proprietor: **Huawei Technologies Co., Ltd.
Longgang District
Shenzhen, Guangdong 518129 (CN)**

(72) Inventors:
 • **LUO, Min
 San Jose, CA California 95131 (US)**
 • **CHU, Cing-Yu
 Long Island City, NY New York 11109 (US)**
 • **XI, Kang
 Morganville, NJ New Jersey 07751 (US)**
 • **CHAO, Hung-Hsiang Jonathan
 Holmdel, NJ New Jersey 07733 (US)**
 • **CHOU, Wu
 Basking Ridge, NJ New Jersey 07920 (US)**

(74) Representative: **Thun, Clemens
Mitscherlich PartmbB
Patent- und Rechtsanwälte
Karlstraße 7
80333 München (DE)**

(56) References cited:
**US-A1- 2013 329 548**

 • **CING-YU CHU ET AL: "Congestion-aware single
 link failure recovery in hybrid SDN networks",
 2015 IEEE CONFERENCE ON COMPUTER
 COMMUNICATIONS (INFOCOM), 26 April 2015
 (2015-04-26), pages 1086 - 1094, XP055376424,
 ISBN: 978-1-4799-8381-0, DOI:
 10.1109/INFOCOM.2015.7218482**
 • **ASHWOOD-SMITH HUAWEI M SOLIMAN
 CARLETON UNIVERSITY T WAN HUAWEI P:
 "SDN State Reduction;
 draft-ashwood-sdnrg-state-reduction-00.txt",
 SDN STATE REDUCTION;
 DRAFT-ASHWOOD-SDNRG-STATE-REDUCTIO
 N-00.TXT, INTERNET ENGINEERING TASK
 FORCE, IETF; STANDARDWORKINGDRAFT,
 INTERNET SOCIETY (ISOC) 4, RUE DES
 FALAISES CH- 1205 GENEVA, SWITZERLAND, 3
 July 2013 (2013-07-03), pages 1 - 23, XP015094727**

- **KOZAT ULASC C ET AL: "On diagnosis of forwarding plane via static forwarding rules in Software Defined Networks", IEEE INFOCOM 2014 - IEEE CONFERENCE ON COMPUTER COMMUNICATIONS, IEEE, 27 April 2014 (2014-04-27), pages 1716 - 1724, XP032613389, DOI: 10.1109/INFOCOM.2014.6848109**
- **ONF: "OpenFlow Switch Specification - Version 1.4.0", 14 October 2013 (2013-10-14), XP055322618, Retrieved from the Internet <URL:https://www.opennetworking.org/images/ stories/downloads/sdn-resources/onf-specificat ions/openflow/openflow-spec-v1.4.0.pdf> [retrieved on 20161124]**

## Description

### Claim of Priority

This application claims the benefit of U.S. Provisional Application No.: 61/992,063, filed May 12, 2014.

### Technical Field

The claimed subject matter pertains to hybrid networks. In particular, it provides mechanisms for partial integration of Software Defined Networking (SDN) devices in traditional IP infrastructures in order to achieve potential benefits of SDN to facilitate fast failure recovery and post-recovery load balancing in the dominant traditional IP networks.

### Background

The continued evolution and integration of computer networking has led to computerized networks becoming the backbone of modern communication. Yet, despite the tremendous development, both small and large scale computing networks remain subject to service interruptions and failures (due to, for example, inadvertent cable damage, interface card faults, software bugs, and mis-configuration, etc.). Traditional computer networks typically utilize a networking model and communications protocols defined by the Internet Protocol Suite commonly known as TCP/IP.

These traditional networks, also known as Internet Protocol (IP) networks, typically adhere to a topology that includes multiple nodes, such as data communication equipment ("DCE") like switches and routers; or data terminal equipment ("DTE") such as computers, servers, mobile devices. In typical networks, both DCEs and DTEs may be addressed individually in the network and interconnected by communication links. Data is transmitted throughout the network by being routed through one or more links until it reaches the node at the destination address. Network failures result when a networked node or link is unresponsive or otherwise incapable of either processing and/or forwarding data on to the next node along the route.

Traditional IP networks utilize a variety of methods to assist in recovery from network failures. Unfortunately, traditional recovery methods (such as shortest-path recalculation, IP fast reroute, etc.) are typically unable to provide sufficient coverage to all possibly affected nodes or links in the network. More sophisticated methods may be able to provide sufficient coverage, but in exchange can be inconveniently disruptive and prohibitively complex. Additionally, convergence to stand-by resources may be problematic or time-consuming, and worse still these types of solutions may be able to reach only locally optimal solutions that could easily lead to new congestions in the network, while also preventing some of the resources from being utilized due to their distributed nature.

Software Defined Networking (SDN) is an approach to data/computer networking that decouples the primary functions of a traditional computer network infrastructure. Under SDN solutions, the mechanism for making network traffic routing decisions (the control plane) is decoupled from the systems that perform the actual forwarding of the traffic to its intended destinations (the data plane). Decoupling the control plane from the data plane allows for the centralization of control logic that eventually lead to much improved resource utilization, effective policy administration and flexible management with significantly reduced cost.

Under many SDN implementations, network devices still perform the functions on the data plane, but the functions traditionally performed on the control plane are decoupled and abstracted to a logically central layer/plane. Open Flow (OF) is a standardized protocol used by an external network controller (typically a server) to communicate with a network device (typically a network switch) in SDN networks. The OF protocol allows the controller to define how packets are forwarded at each SDN network device, and the networking devices (such as switches) to report to the controller their status and/or traffic statistics. While becoming increasingly popular, the deployment of SDN devices (e.g., SDN switches) is generally a gradual process, due to the cost and labor required to replace incumbent Internet Protocol (IP) network devices with SDN enabled network devices. Moreover, large-scale replacement of existing portions of infrastructure would likely result in severe service disruptions if performed all at once.

The document "SDN State Reduction, draft-ashwood-sdnrg-state-reduction-00.txt", Internet engineering task force, IETF; Standard Working Draft, Internet society (ISOC) 4, 2013-07-03, refers to issues about the SDN state reduction.

The document "On diagnosis of forwarding plane via static forwarding rules in Software Defined Networks", IEEE INFOCOM 2014 - IEEE CONFERENCE ON COMPUTER COMMUNICATIONS, IEEE, 2014-04-27, refers to issues about installing an optimal or near-optimal number of static forwarding rules and detecting link failures.

### SUMMARY

The invention is defined by the subject matter of independent claims. Further aspects of the invention is outlined in the dependent claims.

As a solution to the type of problems noted above, this disclosure provides novel methods and systems for a network topology wherein an IP network is partially integrated and augmented with SDN-OF (or other controller-switch communication) enabled network devices to provide a resilient network that is able to quickly recover from network failures at single links or nodes, and achieves post-recovery load balancing while minimizing cost and complexity. By replacing a very limited number of traditional IP nodes (such as routers) with SDN-Openflow enabled switches, this invention discloses a novel network architecture and methods that allow for ultra-fast and load balancing-aware failure recovery of the data network.

According to aspects of the invention, methods and devices are provided according to independent claims 1, 4, 6 and 7.

## BRIEF DESCRIPTION OF DRAWINGS

The accompanying drawings, which are incorporated in and form a part of this specification, illustrate embodiments of the disclosure and, together with the description, serve to explain the principles of the presently claimed subject matter:

Figure 1 depicts an illustration of an exemplary network topology, in accordance with various embodiments of the present disclosure.

Figure 2 depicts a block diagram of an exemplary network configuration, in accordance with various embodiments of the present disclosure.

Figure 3 depicts a block diagram of an exemplary scenario, in accordance with various embodiments of the present disclosure.

Figure 4 depicts a flowchart of a process for partially integrating SDN-OF enabled devices in an IP network, in accordance with various embodiments of the present disclosure.

Figure 5 depicts a flowchart of a process for performing failure recovery in a hybrid network, in accordance with various embodiments of the present disclosure.

Figure 6 depicts an exemplary computing device, in accordance with various embodiments of the present disclosure.

## DETAILED DESCRIPTION

Reference will now be made in detail to several embodiments. While the subject matter will be described in conjunction with the alternative embodiments, it will be understood that they are not intended to limit the claimed subject matter to these embodiments. The invention is defined in the independent claims as appended.

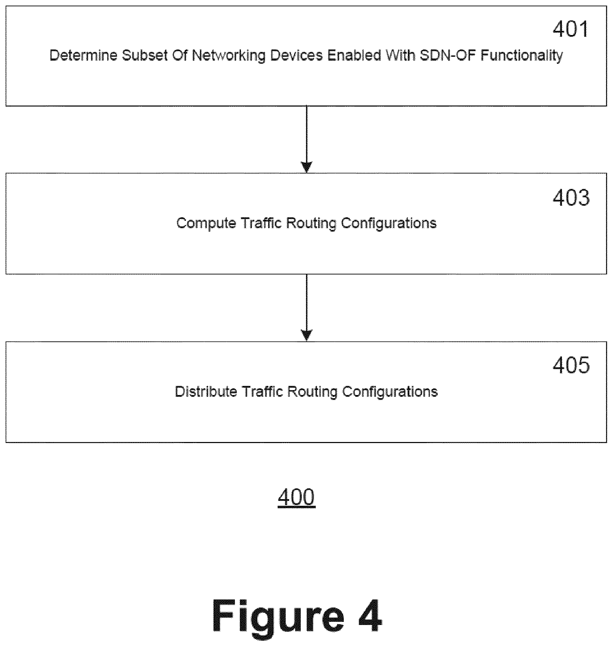

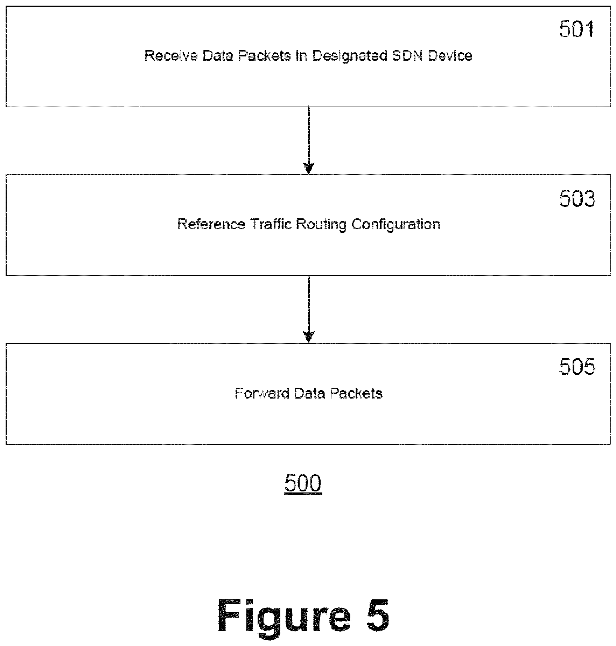

Portions of the detailed description that follow are presented and discussed in terms of a process. Although operations and sequencing thereof are disclosed in a figure herein (e.g., Figures 4 and 5) describing the operations of this process, such operations and sequencing are exemplary. Embodiments are well suited to performing various other operations or variations of the operations recited in the flowchart of the figure herein, and in a sequence other than that depicted and described herein.

As used in this application the terms component, module, system, and the like are intended to refer to a computer-related entity, specifically, either hardware, firmware, a combination of hardware and software, software, or software in execution. For example, a component can be, but is not limited to being, a process running on a processor, an integrated circuit, an object, an executable, a thread of execution, a program, and/or a computer. By way of illustration, both an application and/or module running on a computing device and the computing device can be a component. One or more components can reside within a process and/or thread of execution, and a component can be localized on one computer and/or distributed between two or more computers. In addition, these components can be executed from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

Various techniques described herein can be used for various data communication systems and protocols, including Software Defined Networking (SDN), OpenFlow (OF), and Internet Protocol (IP), etc. The terms "system" and "network" may be used herein interchangeably. A network entity may include a network node (e.g., an IP router or switch) or a link between two nodes. The terms "node" and "network node" may also be used herein interchangeably. An SDN-OF enabled device may include (but is not limited to) a dedicated network device such as an SDN-OF switch, an SDN-OF router, or an SDN-OF router/switch combination, or may include IP network devices (such as routers) that have been programmed with modules with SDN-OF functionality (such as an SDN-OF enablement application module).

As described herein, various solutions are provided that integrate SDN-OF devices (such as SDN-OF enabled switches) into an IP network. In one embodiment, a solution may be adapted from an existing IP network, rather than a brand new network built from scratch. According to alternate embodiments, the solution may be a new hybrid IP and SDN network, and may even be extended to a multi-protocol label switching (MPLS) (or other technology and protocols) networks through the integration of SDN-OF switches and a network controller. Furthermore, various aspects are described herein in connection with a computer or data network implemented as an arrangement of nodes connected by links. A node is a data communication equipment (DCE), such as a router or a switch.

According to one or more embodiments, a relatively small number of existing IP routers/switches in a traditional IP network are replaced with pure or hybrid SDN-OF enabled switches to form a hybrid partial-SDN network. In one or more alternate embodiments, the hybrid SDN network can select a few (programmable) IP routers in which SDN applications and modules may be executed or replace them with pure SDN-OF switches. Such hybrid networks are able to quickly recover from a failure and to achieve post-recovery load balancing with more reasonable and acceptable, and significantly reduced complexity utilizing SDN-OF technologies.

According to an aspect of the invention, a method is provided to minimize the number of SDN network devices required for enabling such capabilities in a given IP network, while guaranteeing failure recovery reachability and a method to optimize the placement of such SDN switches. In an embodiment, minimizing the number of SDN enabled network devices may be performed by selecting a subset of an existing pool of IP network nodes (e.g., routers) to be replaced by SDN-OF enabled devices (e.g., switches). Alternately, a subset of the existing IP network nodes may, if suitable, be programmed with SDN-OF modules. In addition, the placement of the chosen number of SDN-OF enabled devices should ensure that each recovery path does not traverse the failure (link or node), when an error occurs.

According to an aspect of the invention, a method is provided to quickly recover from failures and resume data forwarding. In one or more embodiments, the process by which recovery from failures is performed also incorporates load balancing during recovery. In one or more embodiments, failure recovery is possible by detecting a failure in a network entity, such as a network node or link, and forwarding the data packets to an SDN-OF enabled device via IP tunneling. The SDN-OF enabled device then references a flow table provided by the external SDN-OF controller or pre-configured based on offline routing with given or predicted traffic matrices, before forwarding the data packets onto an intermediate node in an alternate route guaranteed to reach the final destination and bypass the failed network entity (e.g., a node or link). When a node detects a failure, it immediately reroutes the affected packets to such a pre-configured intermediate SDN-OF enabled networking device (such as a switch). The SDN switch then intelligently sends the flows to their respective intermediate nodes that guarantee the reachability to the intended destination without looping back by utilizing the multiple paths based on the above computed flow entries in the flow tables. The SDN enabled networking devices can also dynamically adjust flow rerouting to achieve load balancing, based on the current network state and/or the current load in the network nodes.

SDN-OF/IP HYBRID NETWORKS

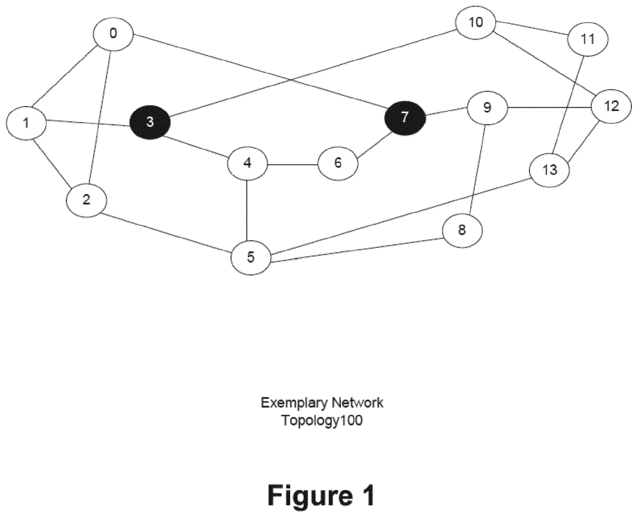

Figure 1 depicts a block diagram 100 of an exemplary network topology according to various embodiments. For illustrative purposes, the architecture of a hybrid network with partially integrated SDN-switches is presented. As shown, the hybrid network may comprise various networking entities including multiple network nodes (0-13), each network node being connected to another by a link (indicated as a solid line). In an embodiment, the network nodes may be implemented as a combination of IP nodes (nodes 0-2, 4-6, and 8-13) and nodes with SDN-OF functionality (nodes 3, 7). In one or more embodiments, IP nodes may be implemented as routers with functionality on both the data plane and the control plane, while SDN-OF enabled nodes may be implemented as SDN switches using OpenFlow protocol to communicate with a centralized network or an SDN-OF controller (not shown).

According to one or more embodiments, the SDN-OF controller may collect traffic data in the network (e.g., from the nodes in the network) constantly or periodically, in order for the SDN-OF enabled devices to calculate routing or flow tables (as defined in the Open Flow protocol), which are distributed to the SDN enabled devices using the OpenFlow protocol. In one or more embodiments, the SDN controller is also able to perform load balancing by dynamically selecting the intermediate nodes through which forwarding of redirected packets is performed based on current network traffic.

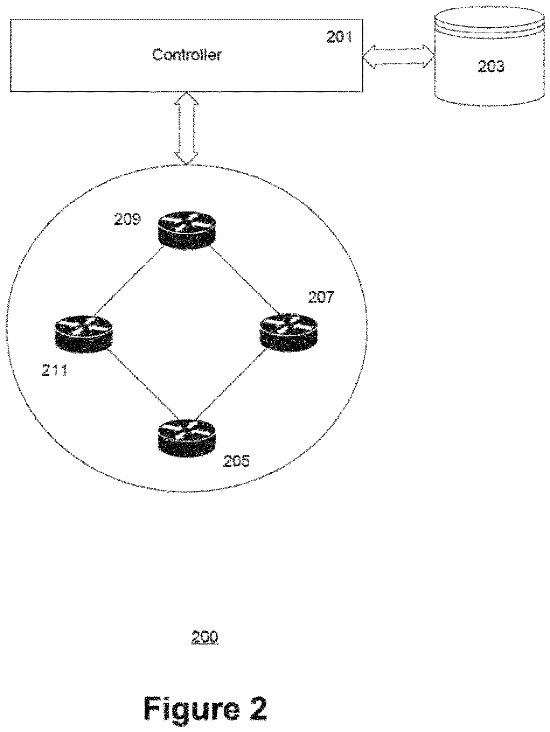

Figure 2 depicts a block diagram 200 of an exemplary network configuration, in accordance with various embodiments of the present disclosure. As presented in Figure 2, an SDN controller 201 executes and controls one or more network nodes (205, 207, 209, and 211) in a hybrid IP and SDN-OF network. In one or more embodiments, one or more of the nodes (205-211) may be implemented with SDN-OF functionality (e.g., as SDN-OF switches/routers). The SDN-OF enabled devices may perform packet forwarding, while abstracting routing decisions to the SDN-OF controller 201. Routing decisions may be based on traffic data accumulated in the nodes (205-211) and received in the SDN-OF controller 201, or based on routing policies.

In one embodiment, the traffic data may be stored in a database 203 coupled to the SDN-OF controller 201, and used to generate flow tables, similar to the routing tables in the IP routers or switches, but with more fine grained control based on all multi-layer attributes that could be derived from the packets or through other means. The generation of the flow/routing tables may be performed dynamically, based on detected triggers or events. Once generated, the SDN-OF controller 201 distributes the flow/routing tables to the SDN-OF enabled devices. When a link failure is experienced by an IP node, affected packets are forwarded via IP tunneling protocols to some SDN-OF enabled devices, which then forward the packets along alternate routes based on the flow/routing tables received from the SDN-OF controller 201.

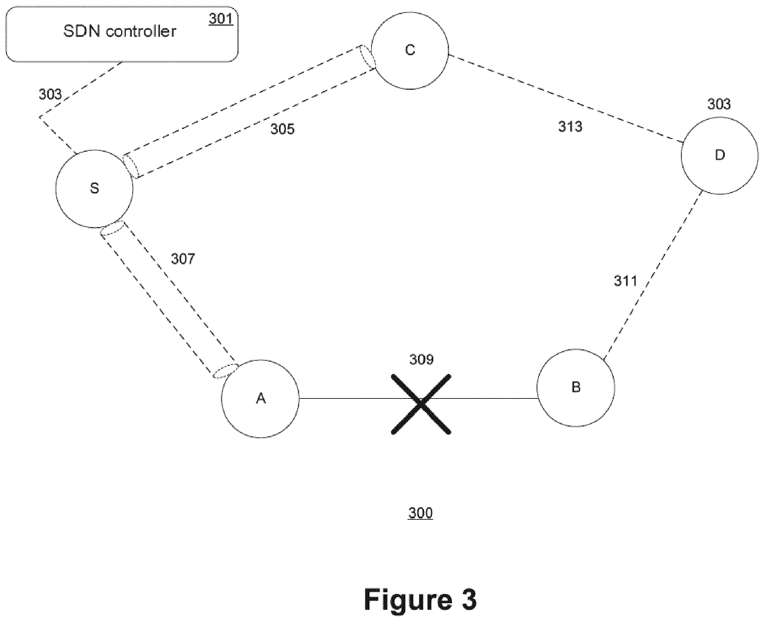

Figure 3 depicts an illustration of a proposed framework 300 according to one or more embodiments of the claimed subject matter. As depicted in Figure 3, each interface of a node in a network (e.g., nodes A, B, C, and D) is configured to have a backup IP tunnel (305, 307) to provide failover upon detecting a link failure. The IP tunnel is established between the detecting node and one or more SDN-OF switch(es) (S) which is/are called the designated SDN switch(es) for that IP device (router or switch). Figure 3 depicts an exemplary scenario where a link failure is detected. As presented in Figure 3, when a link failure is detected (e.g., between nodes A and B), node A - which is directly connected to the failed link - immediately forwards all the packets that would have transmitted on the failed link to the corresponding designated SDN-OF switch S through the pre-configured and established IP tunnel (307).

Upon receiving the tunneled traffic from node A, the SDN-OF switch S first inspects the packets, performs a table lookup to determine an alternate route for the packets to reach their intended destination(s) that bypasses the failed link. Once determined, the SDN-OF switch forwards the data packet to the destination node if possible, or an intermediate node along the calculated alternate route (in this case, intermediate node C) in an IP tunnel (309) connected with the intermediate node (C). In one or more embodiments, the route to the identified intermediate node may be referenced in the table look up, with the route being calculated at an external network controller using routing optimization algorithms, such as the shortest path algorithm. At the intermediate node C, the packets are forwarded to the destination node, again through a route which is unaffected by the failed link, as determined by a centralized network controller 301, using a heuristic (e.g., certain enhanced shortest path algorithms).

In one or more embodiments, the assignment of designated SDN network devices are destination independent, and as such the complexity of configuring a failover is minimized since routers in the network will no longer be required to account for each individual destination. In one or more embodiments, a designated SDN switch is able to accommodate all the possible destinations tunneled from an affected node with corresponding intermediate SDN-OF enabled nodes. The particular route traveled may be calculated by the external network controller and distributed to each of the SDN network devices, based on the network states and the observed or predicted traffic load. Figure 4 depicts a flowchart of a process for partially integrating SDN-OF enabled devices in an IP network, in accordance with various embodiments of the present disclosure. At step 401, a subset of nodes in an IP network is determined with SDN-OF functionality. In one or more embodiments, the subset of nodes may be selected to be replaced (or upgraded) with SDN capabilities. In one or more embodiments, the number of nodes selected to be replaced (or upgraded) is minimized, to likewise minimize the cost of deployment and interruptions to service that may result from integrating SDN capabilities. The subset of IP network nodes may be selected by determining the least number of nodes that still allows the network to achieve certain characteristics. In one embodiment, these characteristics include 1) that for each link that includes a node that is not enabled with SDN-OF functionality, a SDN-OF enabled device in the network is determined and designated; and 2) that for every SDN-OF enabled networking device, at least one intermediate node allows rerouted packets to reach corresponding destinations without looping back to a failed link or failed network node.

The selected nodes may be replaced by dedicated SDN hardware such as switches, or alternately may be upgraded programmatically via the installation of SDN capable software modules. In one or more embodiments, an SDN-OF capable network controller is executed in a node external with respect to, but communicatively coupled with, the SDN-OF enabled devices. The SDN-OF capable network controller may be executed on a server, or another computing device for example. Once executing, the SDN controller receives traffic data from the nodes (IP routers) in the network, via one or more communications protocols. The traffic data is then used to compute traffic routing configurations (e.g., routing tables) for the SDN-OF enabled devices at step 403. Finally, at step 405, the traffic configurations are distributed to the SDN-OF enabled devices. In one or more embodiments, the acquisition of traffic data and the generation of traffic configurations may be performed periodically and even dynamically, in order to ensure current traffic data is reflected in the traffic configurations.

NODE SELECTION

According to one or more embodiments, the number of SDN-OF enabled devices may be limited to the minimum number that still provides complete failure recovery coverage for every node in the network. Determining the minimum number of SDN-OF enabled devices includes determining: 1) for each link failure, an affected node must have at least one designated SDN enabled device which is destination independent, and 2) for every SDN-OF enabled device, there exists at least one intermediate node for each possible destination.

Minimizing the number of nodes in a network that can be replaced or upgraded with SDN enabled functionality may be expressed as:

$$\text{minimize} \sum_i u_i \quad (1)$$

subject to:

$$\sum_i b_{x,i}^e (1 - \delta_{x,i}^e)[\sum_m (1 - \delta_{i,m}^e)(1 - \delta_{m,d}^e)] \geq \beta_x^e \delta_{x,d}^e \quad (2)$$

$$\sum_i b_{x,i}^e \leq \beta_x^e \quad (3)$$

$$b_{x,i}^e \leq u_i \quad (4)$$

where (1): The objective is to minimize the number of SDN-OF enabled switches, with the following constraints; (2): link e, when originating node x fails, x must have at least one designated SDN-OF enabled switch to reach out; (3) if node x belongs to link e, it must have one designated SDN-OF enabled switch to reach out when link e fails; (4) node I must be a SDN-OF enabled switch if it's chosen by any node as the designated SDN - OF enabled switch.

Table I summarizes the parameters and notations:

### TABLE I
#### NOTATIONS FOR REACHABILITY

| | |
|---|---|
| $(\mathbf{V}, \mathbf{E})$ | A network with node set $\mathbf{V}$ and link set $\mathbf{E}$ |
| $\beta_x^e$ | Binary, $\beta_x^e = 1$ if node $x$ is an end node of link $e$; 0, otherwise. |
| $\delta_{i,j}^e$ | Binary, $\delta_{i,j}^e = 1$ if link $e$ is on the shortest path from node $i$ to node $j$; 0 otherwise. |
| $b_{x,i}^e$ | Binary, $b_{x,i}^e = 1$ if node $i$ is chosen as node $x$'s designated SDN switch when link $e$ fails; 0, otherwise. |
| $N_{i,m}$ | Binary, $N_{i,m} = 1$ if node $i$ and node $m$ are neighbors with only one hop; 0, otherwise |
| $u_i$ | Binary, $u_i = 1$ if node $i$ is chosen to be a SDN switch; 0, otherwise. |
| | $e \in \mathbf{E}$ and $i, j, x, m \in \mathbf{V}$ |

NETWORK RECOVERY

Figure 5 depicts an exemplary flowchart of a process for network recovery after a failure. At step 501, traffic from an affected node (e.g., a failure in a link or a node) is received in a device enabled with SDN-OF functionality. According to one or more embodiments, the failure in the link or node is detected in a first, detecting node (such as a router) directly connected to the failed network entity. Upon detecting a link or an adjacent node failure, the detecting node will redirect all the traffic on the failed link to its designated SDN-OF device(s) through IP tunneling. In one or more embodiments, the packets are delivered via an established IP tunnel between the designated SDN-OF device and the detecting node. Upon receiving the tunneled traffic from the affected node, the SDN-OF switch first inspects the packets, then references pre-determined traffic data (e.g., via a table lookup procedure) at step 503 to determine an alternate route for the packets to reach their intended destination(s) that bypasses the failed link. The packets are then forwarded on to the destination if directly connected to the SDN-OF enabled device, or to the next node in the alternate route otherwise (step 505). The next node then forwards the packets on to the destination node if possible, or to the next node in the route that allows the packets to reach the destination without looping back to the failed link or node.

Routing tables may be supplied to the SDN-OF enabled device by a communicatively coupled network SDN-OF controller. Since each node has prior knowledge of which SDN-OF switch(es) the traffic on the failed link should migrate to, the recovery can be completed very quickly. The SDN -OF controller can also collect the link utilization of the hybrid network and predetermine the routing paths for the traffic on the failed link to achieve better load balancing in the traffic, avoiding potential congestion caused by traffic redistribution. By setting up tunnels between the traditional IP routers and SDN-OF switches, the proposed framework allows IP routers to perform failover immediately upon detecting a link failure and redirect traffic to SDN-OF switches. The SDN-OF switches can then help to forward the traffic to bypass the failed link based on the routing decision made by the SDN-OF controller. Since the SDN-OF controller is able to peer into the entire network to gain the knowledge of the current network condition, including the node loads and/or status of the network, optimal routing decisions can be made to load-balance the post-recovery network.

In one or more embodiments, IP tunneling may include IP tunneling protocols that allow routing protocols through the created tunnels, such as Generic Routing Encapsulation (GRE). To provide failover, routing protocols such as Enhanced Interior Gateway Routing Protocol (EIGRP) may be used to keep a successor route in case a primary route fails. Other routing protocols such as Open Shortest Path First (OSPF) that don't support such a feature may still be utilized by applying policy-based routing to select a route when a link failure is detective. Alternate embodiments may also use methods such as configuring static routes with larger distances with a less specific prefix addresses so that the router will start using the less specific path when a link on the primary path fails.

While the foregoing description has focused on single link failures, it is to be understood that embodiments of the present claimed invention are well suited to be extended to failures at nodes as well, according to various embodiments. For single node failures, the tunneling paths determined in table look up or traffic data reference would not include the failed node.

LOAD BALANCING

After all designated SDN-OF devices are determined according to the process 400 described above, intermediate SDN-OF enabled nodes are identified to forward the data packets when a link failure occurs. For a certain destination, there may exist multiple feasible intermediate nodes (e.g., IP and/or SDN-OF enabled networking devices), and selecting the optimal intermediate node may help further avoid or reduce congestion. In one or more embodiments, the network (SDN-OF) controller may compute the selection of such intermediate nodes periodically to react to current network conditions.

In one or more embodiments, the selection of SDN-OF enabled nodes is destination dependent, so that every destination node has a corresponding intermediate node. Intermediate node selection is performed by minimizing the maximum link utilization over all links after a redistribution of traffic following a network entity (link or node) failure. In one or more embodiments, the network/SDN controller determines the load of each link. To acquire this information, each IP node in the network may run a protocol (such as OSPF) which allows the SDN-OF controller to gather link load information in the network. Under such protocols, information such as available bandwidth can be exchanged, so that each SDN-OF device is able to get the utilization of all the links in the network and forward this information to the SDN-OF controller. This allows the SDN-OF controller to peer into the entire network and select proper intermediate SDN-OF enabled nodes to achieve load balancing based on current traffic. In still further embodiments, the hybrid network is able to consider prioritization. According to these embodiments, data packets flagged or otherwise identifiable as high priority may be routed along routes with greater available bandwidth.

By considering every single link (or node) failure scenario, the controller chooses the intermediate SDN-OF enabled node for each destination node so that the link utilization after redirecting all the affected packets is minimized. Selected intermediate nodes may, in some embodiments, be stored as a rule and installed in a table of SDN-OF enabled devices.

In one embodiment, the SDN-OF controller performs the optimization process for intermediate SDN-OF enabled node selection periodically to react to balance the current workload along each link. Paths are computed by the SDN-OF controller, which can further obtain the link-path incidence indicating if a link is used by a certain path. The load-balancing formulation may be expressed as below, and can be applied for every single failure situation:

$$\text{minimize} \; \gamma \qquad (5)$$

$$\text{subject to:}$$

$$\sum_p \alpha_{d,p}^s = 1 \qquad (6)$$

$$\sum_s \square \sum_d \square \sum_p \lambda^s_{e,d,p} \, \alpha^s_{d,p} \, t^s_d + l_e = y_e \qquad (7)$$

$$y_e \leq \Upsilon c_e \qquad (8)$$

where

(5): The objective is to minimize the maximal link utilization, with the following constraints;
(6): ensures that for each affected router and destination pair, only one path is used to reach each destination;
(7): the workload on each link after traffic redirection is the summation of current workload of each link and the traffic volume from the designated SDN-OF switches to the destinations;
(8): the workload of each link after traffic redirection is bounded by the maximal link utilization.

The parameters are described as in the following table:

TABLE II
NOTATIONS FOR LOAD BALANCING

| | |
|---|---|
| $l_e$ | Traffic load on link $e$ without redirected traffic |
| $c_e$ | Capacity of link $e$ |
| $\lambda^s_{e,d,p}$ | Binary, $\lambda^s_{e,d,p} = 1$ if link $e$ is on the path $p$ from an affected router $s$ to destination $d$; 0, otherwise |
| $t^s_d$ | Traffic volume from an affected router $s$ to destination $d$ |
| $\alpha^s_{d,p}$ | Binary, $\alpha^s_{d,p} = 1$ if path $p$ is chosen for the affected router $s$ and destination $d$ to deliver traffic to destination $d$; 0, otherwise |
| $y_e$ | Traffic load on link $e$ after redirection |
| $\gamma$ | Upper bound of link utilization |

Equation (5) ensures that for each SDN-OF device, only one route is used -- and by extension only one intermediate SDN-OF enabled node -- to reach each destination node. Equation (6) ensures that the workload on each link after a traffic redirection is the summation of the current workload of each link and the traffic volume from the designated SDN-OF device to the destination nodes. Equation (7) ensures that the workload of each link after a traffic redirection is bounded by the maximal link utilization. By solving the above equations to minimize link utilization, the upper bound of link utilization can be calculated when any single link failure occurs. In addition, the intermediate node that should be used by an SDN device to reach a certain destination is also determined.

While single designated SDN devices for nodes have been primarily described thus far herein, it is to be understood that embodiments of the claimed subject matter are not limited to such, and embodiments are well-suited to multiple designated SDN devices for one or more nodes in the network. Under circumstances where each router tunnels all affected traffic to one designated SDN device when a link failure is detected, the tunneling paths may be overwhelmed, and congestion in the links along the alternate route may occur. To alleviate this potential congestion, traffic traversing the tunnel paths after redirection may be reduced by introducing multiple designated SDN devices for each IP router so that affected traffic may be split among multiple channels. According to such embodiments, the approach can be further enhanced to allow 2 (or more) designated SDN switches for any IP device. It could be achieved by solving the following optimization problem:

$$\text{minimize} \sum_i u_i \qquad (9)$$

subject to:

$$b^e_{x,i}\beta^e_x\delta^e_{x,d} \leq (1 - \delta^e_{x,i})[\textstyle\sum_m N_{i,m}(1 - \delta^e_{i,m})(1 - \delta^e_{m,d})] \quad (10)$$

$$\sum_i \mathbf{b}^e_{x,i} \leq \mathbf{N}\beta^e_x \quad (11)$$

$$\mathbf{b}^e_{x,i} \leq \mathbf{u}_i \quad (12)$$

Where $N$ stands for the number of designated SDN devices used by each router. This modified formulation is similar to the original formulation for determining single designated SDN devices save for the introduction of $N$ to assure that each IP node can reach $N$ designated SDN enabled devices when one of the links to the node fails. According to the formulations provided above, the minimum number of SDN enabled devices may be calculated, with $b^e_{x,i}$ indicating the $N$ designated SDN devices used by each node.

When the N (>= 2) designated SDN devices of each node (router) are determined, traffic may be further split among the multiple SDN devices. In one embodiment, a weighted hash is performed based on the link utilization of the tunneling paths to different designated SDN devices so that the redirected traffic forwarded to each designated SDN device is made proportional to the available bandwidth of those tunneling paths. In one embodiment, the SDN-OF periodically collects link utilization information of the entire network from the SDN-OF enabled or original IP devices, with each node computing the link utilization of the most congested link on the tunneling paths to different designated SDN devices. By subtracting this link utilization, the available bandwidth can be determined for each tunneling path. The available path bandwidth could then be used as the weight for each tunneling path, and traffic to different destinations is thereafter hashed to different designated SDN devices based on this determined weight.

EXEMPLARY COMPUTING DEVICE

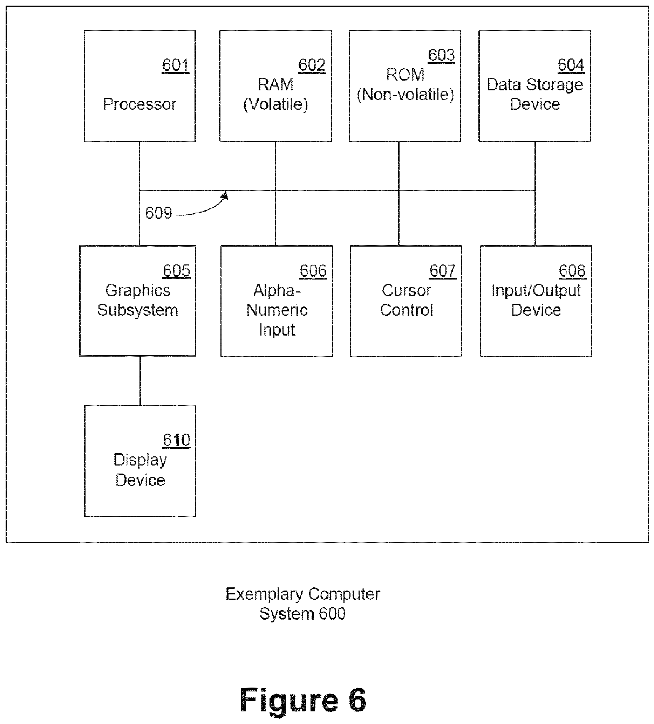

As presented in Figure 6, an exemplary system 600 upon which embodiments of the present invention may be implemented includes a general purpose computing system environment. In one or more embodiments, one or more intermediate SDN-OF enabled nodes, destination nodes, and/or the computing environment upon which the network SDN-OF controller is executed may be implemented as a variation or configuration of exemplary system 600. In its most basic configuration, computing system 600 includes at least one processing unit 601 and memory, and an address/data bus 609 (or other interface) for communicating information. Depending on the exact configuration and type of computing system environment, memory may be volatile (such as RAM 602), non-volatile (such as ROM 603, flash memory, etc.) or some combination of the two.

Computer system 600 may also comprise an optional graphics subsystem 605 for presenting information to the computer user, e.g., by displaying information on an attached display device 610, connected by a video cable 611. According to embodiments of the present claimed invention, the graphics subsystem 705 may be coupled directly to the display device 610 through the video cable 611. In alternate embodiments, display device 610 may be integrated into the computing system (e.g., a laptop or netbook display panel) and will not require a video cable 611.

Additionally, computing system 600 may also have additional features/functionality. For example, computing system 600 may also include additional storage (removable and/or non-removable) including, but not limited to, magnetic or optical disks or tape. Such additional storage is illustrated in Figure 6 by data storage device 607. Computer storage media includes volatile and nonvolatile, removable and non-removable media implemented in any method or technology for storage of information such as computer readable instructions, data structures, program modules or other data. RAM 602, ROM 603, and data storage device 607 are all examples of computer storage media. Computer system 600 also comprises an optional alphanumeric input device 607, an optional cursor control or directing device 607, and one or more signal communication interfaces (input/output devices, e.g., a network interface card) 609. Optional alphanumeric input device 607 can communicate information and command selections to central processor 601. Optional cursor control or directing device 607 is coupled to bus 609 for communicating user input information and command selections to central processor 601. Signal communication interface (input/output device) 609, also coupled to bus 609, can be a serial port. Communication interface 609 may also include wireless communication mechanisms. Using communication interface 609, computer system 600 can be communicatively coupled to other computer systems over a communication network such as the Internet or an intranet (e.g., a local area network), or can receive data (e.g., a digital television signal). With the solutions herein described, the traffic rerouting configuration in the SDN-OF switches could be performed periodically based on the updated network-wide status and/or the traffic load, while optimizing post-recovery load balancing. The computation results are then utilized by the SDN-OF controller to generate flow entries for the SDN-OF switches. Optionally, it is possible to enable prioritized traffic processing. For example, the approach could provide bandwidth guarantees for high priority traffic while only granting best-effort bandwidth allocation to other types of lower-priority traffic. Embodiments of the claimed subject matter allow carriers or enterprises to quickly take advantage of SDN-OF capabilities to transform their existing data networks with low capital and operational expenditures, and offers significant improvement in network resource utilization, automated network management (for example, fast failure recovery with balanced traffic distribution), with significantly reduced management complexity and costs. Such new capabilities can be achieved without the need to overhaul their entire current IP (or MPLS) networks.

## Claims

1. A method performed by a Software Defined Networking Open Flow, SDN-OF, capable network controller, the method comprising:

   • determining (S 401) a subset of network nodes among a plurality of network nodes of an Internet Protocol, IP, network as network nodes on which SDN-OF functionality is to be enabled, wherein after the enabling a hybrid network is provided, the hybrid network comprising IP network nodes and network nodes with SDN-OF functionality, wherein the network nodes of the hybrid network are communicatively coupled by a plurality of links, wherein the determining the subset of network nodes comprises:

      ◦ determining a minimum number of IP nodes of the IP network on which the SDN-OF functionality is to be enabled; and
      ◦ determining the locations of the minimum number of IP nodes in the IP network to be enabled with the SDN-OF functionality,
      wherein the determining the minimum number of IP nodes of the IP network on which the SDN-OF functionality is to be enabled with SDN-OF functionality comprises:

         ▪ determining, for each link of the plurality of links that includes at least one network node that is not enabled with SDN-OF functionality, a designated network node enabled with SDN-OF functionality for the at least one network node of the plurality of network nodes that is not enabled with SDN-OF functionality; and
         ▪ determining, for every network node enabled with SDN-OF functionality, at least one intermediate network node that allows rerouted packets to reach corresponding destinations without looping back to a failed link or failed network node;

   • receiving traffic data from the network nodes of the hybrid network by using a communication protocol, wherein the hybrid network contains those IP nodes of the IP network, which are not part of the subset of network nodes, and contains those network nodes constituting the subset of network nodes on which the SDN-OF functionality is enabled,
   • computing (S 403) traffic routing configurations based on the received traffic data; and
   • distributing (S 405) the traffic routing configurations to the subset of network nodes.

2. The method according to claim 1, wherein the traffic routing configurations are computed and distributed at periodic intervals.

3. The method according to claim 1, wherein the traffic routing configurations are computed and distributed in response to detecting a triggered event based on a network management policy.

4. A method for re-routing data due to link failure in a hybrid network performed by a designated Software-Defined Networking-OpenFlow, SDN-OF, enabled networking device of the hybrid network, wherein the hybrid network comprises Internet Protocol, IP, nodes and nodes with SDN-OF functionality, the method comprising:

   • receiving (S 501) a plurality of data packets intended to be routed through a failed networking entity of the hybrid network;
   • referencing (S 503) a traffic routing configuration in the designated SDN-OF enabled networking device to determine an intermediate networking device of the hybrid network between the designated SDN-OF enabled networking device and an intended destination node of the hybrid network; and

• forwarding (S 505) the plurality of data packets from the designated SDN-OF enabled networking device to the intended destination node if the designated SDN-OF enabled networking device is directly coupled to the intended destination node and to the intermediate networking device otherwise,

▪ wherein the plurality of data packets is automatically forwarded from a first networking device, of the hybrid network, corresponding to the failed network entity via an established IP tunnel between the designated SDN-OF enabled networking device and the first networking device,

▪ wherein the traffic routing configuration is computed by a network controller and distributed to the designated SDN-OF enabled networking device.

5.  The method as claimed in claim 4, wherein referencing the traffic routing configuration to determine the intermediate networking device comprises:

• referencing current traffic load data to determine a current bandwidth available to a plurality of candidate intermediate networking devices;
• identifying a first candidate intermediate networking device of the plurality of candidate intermediate networking devices with the least amount of congestion; and
• selecting the first candidate intermediate networking device as the intermediate networking device.

6.  A Software Defined Networking Open Flow, SDN-OF, capable network controller configured to perform any of the methods according to claims 1-3.

7.  A designated Software-Defined Networking-OpenFlow, SDN-OF, enabled networking device of a hybrid network, wherein the hybrid network comprises Internet Protocol, IP, nodes and nodes with SDN-OF functionality, wherein the designated SDN-OF enabled network device is configured to perform the methods according to claim 4-5.


**Patentansprüche**

1.  Verfahren, das von einer Netzwerksteuerung, die zu softwaredefinierter OpenFlow-Vernetzung, SDN-OF, in der Lage ist, durchgeführt wird, wobei das Verfahren Folgendes umfasst:

• Bestimmen (S 401) einer Teilmenge von Netzwerkknoten unter einer Vielzahl von Netzwerkknoten eines Internetprotokoll-Netzwerks, IP-Netzwerks, als Netzwerkknoten, die mit SDN-OF-Funktionalität auszustatten sind, wobei nach dem Ausstatten ein Hybridnetzwerk bereitgestellt ist, wobei das Hybridnetzwerk IP-Netzwerkknoten und Netzwerkknoten mit SDN-OF-Funktionalität umfasst, wobei die Netzwerkknoten des Hybridnetzwerks durch eine Vielzahl von Verbindungen kommunikativ gekoppelt sind,

wobei das Bestimmen der Teilmenge von Netzwerkknoten Folgendes umfasst:

◦ Bestimmen einer Mindestanzahl von IP-Knoten des IP-Netzwerks, die mit der SDN-OF-Funktionalität auszustatten ist; und
◦ Bestimmen der Standorte der Mindestanzahl von IP-Knoten in dem IP-Netzwerk, die mit der SDN-OF-Funktionalität auszustatten ist,

wobei das Bestimmen der Mindestanzahl von IP-Knoten des IP-Netzwerks, die mit der SDN-OF-Funktionalität mit SDN-OF-Funktionalität auszustatten ist, Folgendes umfasst:

▪ Bestimmen, für jede Verbindung der Vielzahl von Verbindungen, die mindestens einen Netzwerkknoten, der nicht mit SDN-OF-Funktionalität ausgestattet ist, umfasst, eines designierten Netzwerkknotens, der mit SDN-OF-Funktionalität ausgestattet ist, für den mindestens einen Netzwerkknoten der Vielzahl von Netzwerkknoten, der nicht mit SDN-OF-Funktionalität ausgestattet ist; und
▪ Bestimmen, für jeden Netzwerkknoten, der mit SDN-OF-Funktionalität ausgestattet ist, von mindestens einem Zwischennetzwerkknoten, der es umgeleiteten Paketen ermöglicht, die entsprechenden Ziele zu erreichen, ohne zu einer ausgefallenen Verbindung oder einem ausgefallenen Netzwerkknoten zurückzukehren;

• Empfangen von Verkehrsdaten von den Netzwerkknoten des Hybridnetzwerks unter Verwendung eines Kommunikationsprotokolls, wobei das Hybridnetzwerk diejenigen IP-Knoten des IP-Netzwerks enthält, die nicht Teil der Teilmenge von Netzwerkknoten sind, und diejenigen Netzwerkknoten enthält, die die Teilmenge von Netzwerkknoten, die mit der SDN-OF-Funktionalität ausgestattet sind, bilden,
• Berechnen (S 403) von Verkehrsrouting-Konfigurationen basierend auf den empfangenen Verkehrsdaten; und
• Verteilen (S 405) der Verkehrsrouting-Konfigurationen an die Teilmenge der Netzwerkknoten.

2. Verfahren nach Anspruch 1, wobei die Verkehrsrouting-Konfigurationen in periodischen Abständen berechnet und verteilt werden.

3. Verfahren nach Anspruch 1, wobei die Verkehrsrouting-Konfigurationen in Reaktion auf Detektieren eines ausgelösten Ereignisses basierend auf einer Netzwerkverwaltungsrichtlinie berechnet und verteilt werden.

4. Verfahren zum erneuten Routen von Daten aufgrund eines Verbindungsausfalls in einem Hybridnetzwerk, durchgeführt von einer designierten Netzwerkkomponente des Hybridnetzwerks, die mit einer softwaredefinierten OpenFlow-Vernetzung, SDN-OF, ausgestattet ist, wobei das Hybridnetzwerk Internetprotokoll-Knoten, IP-Knoten, und Knoten mit SDN-OF-Funktionalität umfasst, wobei das Verfahren Folgendes umfasst:

• Empfangen (S 501) einer Vielzahl von Datenpaketen, die durch eine ausgefallene Netzwerkeinheit des Hybridnetzwerks zu leiten ist;
• Referenzieren (S 503) einer Verkehrsrouting-Konfiguration in der designierten Netzwerkkomponente, die mit SDN-OF ausgestattet ist, um eine Zwischennetzwerkkomponente des Hybridnetzwerks zwischen der designierten Netzwerkkomponente, die mit SDN-OF ausgestattet ist, und einem beabsichtigten Zielknoten des Hybridnetzwerks zu bestimmen; und
• Weiterleiten (S 505) der Vielzahl von Datenpaketen von der designierten Netzwerkkomponente, die mit SDN-OF ausgestattet ist, an den beabsichtigten Zielknoten, wenn die designierte Netzwerkkomponente, die mit SDN-OF ausgestattet ist, direkt mit dem beabsichtigten Zielknoten gekoppelt ist, und andernfalls an die Zwischennetzwerkkomponente,

■ wobei die Vielzahl von Datenpaketen automatisch von einer ersten Netzwerkkomponente des Hybridnetzwerks, die der ausgefallenen Netzwerkeinheit entspricht, über einen eingerichteten IP-Tunnel zwischen der designierten Netzwerkkomponente, die mit SDN-OF ausgestattet ist, und der ersten Netzwerkkomponente weitergeleitet wird,
■ wobei die Verkehrsrouting-Konfiguration von einer Netzwerksteuerung berechnet und an die designierte Netzwerkkomponente, die mit SDN-OF ausgestattet ist, verteilt wird.

5. Verfahren nach Anspruch 4, wobei das Referenzieren der Verkehrsrouting-Konfiguration zum Bestimmen der Zwischennetzwerkkomponente Folgendes umfasst:

• Referenzieren aktueller Verkehrslastdaten, um eine aktuelle Bandbreite, die für eine Vielzahl von Kandidaten-Zwischennetzwerkkomponenten verfügbar ist, zu bestimmen;
• Identifizieren einer ersten Kandidaten-Zwischennetzwerkkomponente aus der Vielzahl von Kandidaten-Zwischennetzwerkkomponenten mit der geringsten Überbelegung; und
• Auswählen des ersten Kandidaten-Zwischennetzwerkkomponente als die Zwischennetzwerkkomponente.

6. Netzwerksteuerung, die zu softwaredefinierter OpenFlow-Vernetzung, SDN-OF, in der Lage ist und dazu konfiguriert ist, ein beliebiges der Verfahren nach den Ansprüchen 1-3 durchzuführen.

7. Designierte Netzwerkkomponente eines Hybridnetzwerks, die mit softwaredefinierter OpenFlow-Vernetzung, SDN-OF, ausgestattet ist, wobei das Hybridnetzwerk Internetprotokoll-Knoten, IP-Knoten, und Knoten mit SDN-OF-Funktionalität umfasst, wobei die designierte Netzwerkkomponente, die mit SDN-OF ausgestattet ist, dazu konfiguriert ist, die Verfahren nach den Ansprüchen 4-5 durchzuführen.

**Revendications**

1. Procédé exécuté par un dispositif de commande de réseau compatible avec le réseau défini par logiciel OpenFlow, SDN-OF, le procédé comprenant :

- la détermination (S 401) d'un sous-ensemble de noeuds de réseau parmi une pluralité de noeuds de réseau d'un réseau de protocole Internet, IP, en tant que noeuds de réseau sur lesquels la fonctionnalité SDN-OF doit être activée, dans lequel, après l'activation, un réseau hybride est fourni, le réseau hybride comprenant des noeuds de réseau IP et des noeuds de réseau dotés d'une fonctionnalité SDN-OF, dans lequel les noeuds de réseau du réseau hybride sont couplés en communication par une pluralité de liaisons,

dans lequel la détermination du sous-ensemble de noeuds de réseau comprend :

∘ la détermination d'un nombre minimum de noeuds IP du réseau IP sur lesquels la fonctionnalité SDN-OF doit être activée ; et
∘ la détermination des emplacements du nombre minimum de noeuds IP dans le réseau IP devant être activés avec la fonctionnalité SDN-OF,

dans lequel la détermination du nombre minimum de noeuds IP du réseau IP sur lesquels la fonctionnalité SDN-OF doit être activée avec la fonctionnalité SDN-OF comprend :

■ la détermination, pour chaque liaison de la pluralité de liaisons qui comporte au moins un noeud de réseau qui n'est pas activé avec la fonctionnalité SDN-OF, d'un noeud de réseau désigné activé avec la fonctionnalité SDN-OF pour l'au moins un noeud de réseau de la pluralité de noeuds de réseau qui n'est pas activé avec la fonctionnalité SDN-OF ; et
■ la détermination, pour chaque noeud de réseau activé avec la fonctionnalité SDN-OF, d'au moins un noeud de réseau intermédiaire qui permet aux paquets réacheminés d'atteindre des destinations correspondantes sans revenir en arrière vers une liaison défaillante ou un noeud de réseau défaillant ;

- la réception de données de trafic provenant des noeuds de réseau du réseau hybride à l'aide d'un protocole de communication, dans lequel le réseau hybride contient ces noeuds IP du réseau IP, qui ne font pas partie du sous-ensemble de noeuds de réseau, et contient ces noeuds de réseau constituant le sous-ensemble des noeuds de réseau sur lesquels la fonctionnalité SDN-OF est activée,
- le calcul (S 403) de configurations d'acheminement de trafic sur la base des données de trafic reçues ; et
- la distribution (S 405) des configurations d'acheminement de trafic au sous-ensemble de noeuds de réseau.

2. Procédé selon la revendication 1, dans lequel les configurations d'acheminement de trafic sont calculées et distribuées à intervalles périodiques.

3. Procédé selon la revendication 1, dans lequel les configurations d'acheminement de trafic sont calculées et distribuées en réponse à la détection d'un événement déclenché sur la base d'une politique de gestion de réseau.

4. Procédé de réacheminement de données en raison d'une défaillance de liaison dans un réseau hybride, réalisé par un dispositif réseau activé par le réseau défini par logiciel OpenFlow, SDN-OF, désigné du réseau hybride, dans lequel le réseau hybride comprend des noeuds de protocole Internet, IP, et des noeuds dotés d'une fonctionnalité SDN-OF, le procédé comprenant :

- la réception (S 501) d'une pluralité de paquets de données destinés à être acheminés par l'intermédiaire d'une entité réseau défaillante du réseau hybride ;
- le référencement (S 503) d'une configuration d'acheminement de trafic dans le dispositif de réseau activé par SDN-OF désigné pour déterminer un dispositif de réseau intermédiaire du réseau hybride entre le dispositif de réseau activé par SDN-OF désigné et un noeud de destination prévu du réseau hybride ; et
- la transmission (S 505) de la pluralité de paquets de données en provenance du dispositif réseau activé par SDN-OF désigné vers le noeud de destination prévu si le dispositif réseau activé par SDN-OF désigné est directement couplé au noeud de destination prévu et au dispositif réseau intermédiaire dans le cas contraire,

■ dans lequel la pluralité de paquets de données est automatiquement transmise depuis un premier dispositif réseau du réseau hybride, correspondant à l'entité réseau défaillante par l'intermédiaire d'un tunnel IP établi entre le dispositif réseau activé par SDN-OF désigné et le premier dispositif réseau,
■ dans lequel la configuration d'acheminement de trafic est calculée par un dispositif de commande de réseau et distribuée au dispositif réseau activé par SDN-OF désigné.

5. Procédé selon la revendication 4, dans lequel le référencement de la configuration d'acheminement de trafic pour déterminer le dispositif de réseau intermédiaire comprend :

- le référencement de données de charge de trafic actuelles pour déterminer une bande passante actuelle disponible pour une pluralité de dispositifs de réseau intermédiaires candidats ;
- l'identification d'un premier dispositif de réseau intermédiaire candidat de la pluralité de dispositifs de réseau intermédiaire candidats présentant le moins de congestion ; et
- la sélection du premier dispositif de réseau intermédiaire candidat en tant que dispositif de réseau intermédiaire.

6. Dispositif de commande de réseau compatible avec le réseau défini par logiciel OpenFlow, SDN-OF, configuré pour exécuter l'un quelconque des procédés selon les revendications 1 à 3.

7. Dispositif de mise en réseau activé par le réseau défini par logiciel OpenFlow, SDN-OF, désigné d'un réseau hybride, dans lequel le réseau hybride comprend des noeuds de protocole Internet, IP, et des noeuds dotés d'une fonctionnalité SDN-OF, dans lequel le dispositif réseau activé par SDN-OF désigné est configuré pour exécuter les procédés selon les revendications 4 et 5.

Exemplary Network
Topology100

# Figure 1

200

# Figure 2

Figure 3

300

401

Determine Subset Of Networking Devices Enabled With SDN-OF Functionality

403

Compute Traffic Routing Configurations

405

Distribute Traffic Routing Configurations

400

# Figure 4

```
┌─────────────────────────────────────────────────────────────────┐
│                                                             501   │
│        Receive Data Packets In Designated SDN Device              │
│                                                                   │
└─────────────────────────────────────────────────────────────────┘
                                │
                                ▼
┌─────────────────────────────────────────────────────────────────┐
│                                                             503   │
│        Reference Traffic Routing Configuration                    │
│                                                                   │
└─────────────────────────────────────────────────────────────────┘
                                │
                                ▼
┌─────────────────────────────────────────────────────────────────┐
│                                                             505   │
│        Forward Data Packets                                       │
│                                                                   │
└─────────────────────────────────────────────────────────────────┘
```

<u>500</u>

# Figure 5

Exemplary Computer
System 600

# Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61992063

**Non-patent literature cited in the description**

- SDN State Reduction, draft-ashwood-sdnrg-state-reduction-00.txt. *Internet engineering task force, IETF; Standard Working Draft, Internet society (ISOC) 4,* 03 July 2013

- On diagnosis of forwarding plane via static forwarding rules in Software Defined Networks. IEEE INFOCOM 2014 - IEEE CONFERENCE ON COMPUTER COMMUNICATIONS. IEEE, 27 April 2014